**Europäisches Patentamt**

**European Patent Office**

**Office européen des brevets**

(19)

(11) Veröffentlichungsnummer: **0 259 382**

**B1**

(12) **EUROPÄISCHE PATENTSCHRIFT**

(45) Veröffentlichungstag der Patentschrift:
**04.10.89**

(51) Int. Cl.⁴: **F 02 D 41/14,** F 02 D 19/02

(21) Anmeldenummer: **87901311.8**

(22) Anmeldetag: **19.02.87**

(86) Internationale Anmeldenummer:
**PCT/AT 87/00010**

(87) Internationale Veröffentlichungsnummer:
**WO 87/05360 (11.09.87 Gazette 87/20)**

(54) **EINRICHTUNG ZUR REGELUNG DES VERBRENNUNGSGAS-LUFTVERHÄLTNISS.**

(30) Priorität: **05.03.86 AT 563/86**

(43) Veröffentlichungstag der Anmeldung:
**16.03.88 Patentblatt 88/11**

(45) Bekanntmachung des Hinweises auf die Patenterteilung:
**04.10.89 Patentblatt 89/40**

(84) Benannte Vertragsstaaten:
**CH DE FR GB IT LI NL SE**

(56) Entgegenhaltungen:
**EP-A-0 121 028**
**DE-A-2 020 266**
**FR-A-2 283 315**
**FR-A-2 500 061**
**US-A-4 446 940**

(73) Patentinhaber: **Jenbacher Werke AG,**
**Achenseestrasse 1-3, A-6200 Jenbach/Tirol (AT)**

(72) Erfinder: **QUIRCHMAYR, Gerhard,**
**Fasaneriestrasse 6, A-5020 Salzburg (AT)**
Erfinder: **GRUBER, Friedrich, A-6283 Hippach Nr.**
**172, A-6283 Hippach Nr. 172 (AT)**
Erfinder: **KNIPPITSCH, Stefan, Scheffsnoth 39,**
**A-5090 Lofer (AT)**

(74) Vertreter: **Hofinger, Engelbert, Torggler- Hofinger**
**Wilhelm- Greil- Strasse 16, A-6020 Innsbruck (AT)**

EP 0 259 382 B1

**Beschreibung**

Die Erfindung betrifft eine Einrichtung zur Regelung des Verbrennungsgas-Luftverhältnisses bei einem Gasmotor mit magerer Betriebsweise, in dessen Ansaugleitung ein Luft-Gas-Mischer angeordnet ist, wobei ein Lambda-Regler, dem zur Änderung des Verbrennungsgas-Luftverhältnisses eine den Luft-Gas-Mischer einstellende Stelleinrichtung nachgeschaltet ist, und eine Leistungsmeßeinrichtung zur Erfassung der Motorleistung vorgesehen sind, und wobei ein Druckmesser zur Erfassung des vor den Einlaßventilen des Motors herrschenden Gemischdruckes vorgesehen ist, (vergleiche EP-A-121 028).

Es ist bekannt, bei Gasmotoren Abgaskatalysatoren zu verwenden, um die Schadstoffemission, insbesondere die Schadstoffkomponenten $NO_x$, CO und $C_nH_m$ zu verringern.

Bei Verwendung eines Dreiwegkatalysators zur Verringerung der genannten Schadstoffkomponenten $NO_x$, CO und $C_nH_m$ wird der Gasmotor im Bereich eines Verbrennungsgas-Luftverhältnisses von $\lambda = 1$, d.h. im Bereich des stöchiometrischen Verbrennungsgas-Luftverhältnisses betrieben. Um eine zufriedenstellende Konversionsrate des Dreiwegkatalysators für alle drei genannten Schadstoffkomponenten und damit eine Reduzierung der gesamten Schadstoffemission zu erreichen, muß das Verbrennungsgas-Luftverhältnis $\lambda$ geregelt werden und in einem sehr schmalen Bereich, dem sogenannten Lambda-Fenster gehalten werden. Beispielsweise liegt dieses Lambda-Fenster im Bereich von 0,986 - 0,990. Nur bei einem Lambda-Wert innerhalb dieses engen Bereiches ist eine optimale Arbeitsweise des Dreiwegkatalysators gesichert.

Bei einer bekannten Einrichtung erfolgt die Regelung über eine Zirkoniumdioxid-Sonde, die im Abgas den $O_2$-Partialdruck relativ zum $O_2$-Partialdruck der Umgebungsluft mißt. Trotz einer Temperaturkompensation des Reglers ist das schmale vorgeschriebene Lambda-Fenster in der Praxis kaum einhaltbar. Vor allem bei Schwankungen der Gaszusammensetzung, wie sie bei Deponiegas auftreten, und damit verbundenen Schwankungen im Heizwert kann eine optimale Wirkungsweise des bekannten, über eine Lambda-Sonde geregelten Abgaskatalysators nicht erzielt werden.

Weitere Nachteile eines Betriebes mit Dreiwegkatalysator sind darin zu sehen, daß allfällige im Gas auftretende Schadstoffe den Katalysator und die Sonde schnell schädigen und der Verbrauch der Gasmotoren relativ hoch ist. Außerdem tritt eine hohe thermische Belastung der Motorenbauteile auf.

Diese letztgenannten Nachteile lassen sich durch einen Magerbetrieb des Gasmotors verhindern, bei dem ohne Abgaskatalysator gearbeitet werden kann. Magerbetrieb heißt allgemein, daß der Gasmotor mit einem Gemisch mit einem erhöhten Verbrennungsgas-Luftverhältnis

(z. B. $\lambda = 1,3 - 1,7$), also mit Luftüberschuß gegenüber der stöchiometrischen Luftmenge betrieben wird. Bei einer derartigen Betriebsweise nehmen vor allem die $NO_x$-Schadstoffkomponenten im Abgas mit steigendem $\lambda$ rasch ab. Aber auch die CO und HC Abgaskomponenten sind gegenüber dem $\lambda = 1$-Betrieb stark reduziert. Um die $NO_x$-Schadstoffkomponenten im Abgas unter einem geforderten Wert (beispielsweise 500 mg/$Nm^3$) zu halten, muß also mit hohen Verbrennungsgas-Luftverhältnissen (z. B. $\lambda = 1,6$) gefahren werden. Bei zu hohen Lambda-Werten (zu mageres Gemisch) können Verbrennungsaussetzer auftreten. Deshalb muß der Wert des Verbrennungsgas-Luftverhältnisses auch bei Magerbetrieb innerhalb eines Lambda-Bereiches gehalten werden, dessen untere Grenze von der geforderten $NO_x$-Schadstoffemission bestimmt ist und dessen obere Grenze die Aussetzergrenze darstellt.

Der Vorteil gegenüber dem schmalen Lambda-Fenster bei Dreiwegkatalysatoren, das in der Gegend des stöchiometrischen Lambda-Wertes liegt, besteht darin, daß der oben definierte Lambda-Bereich bei Magerbetrieb wesentlich breiter (um einen Faktor 20 und mehr) ist, als das geforderte Lambda-Fenster für einen Dreiwegkatalysator.

Typisch Breiten des Lambda-Bereiches liegen im Bereich von $\Delta\lambda \approx 0,1$, wobei sowohl die obere Aussetzegrenze als auch die unteren $NO_x$-Schadstoffemissionsgrenze mit abnehmender Leistung des Gasmotors sinkt. Die Lage des geforderten Lambda-Bereiches und damit der etwa im der Mitte des Lambda-Bereiches angesiedelte Sollwert des Verbrennungsluftverhältnisses variieren also als Funktion der Motorleistung. Die Breite des Lambda-Bereiches bleibt allerdings über der Motorleistung im wesentlichen konstant.

Wegen sich ändernder Randbedingungen kann sich das Verbrennungsgas-Luftverhältnis $\lambda$ bei gleich eingestelltem Luft-Gas-Mischer verschieben, sodaß auch im Magerbetrieb eine Lambda-Regelung notwendig ist, welche jedoch auf Grund des erwähnten breiteren Lambda-Bereiches leichter durchzuführen ist. Als "äußere" Einflußgrößen auf das Verbrennungsgas-Luftverhältnis $\lambda$ (bei fester Luft-Gas-Mischer-Einstellung) sind anzusehen:

Zusammensetzung des (Treib)gases ($\Delta\lambda$max $\approx$ 7,2 %),

Temperaturdifferenz zwischen Gas und Luft ($\Delta\lambda$max $\approx$ 2 %),

relative Feuchte der Ansaugluft ($\Delta\lambda$max $\approx$ 1 %) und die Genauigkeit des Luft-Gas-Mischers ($\Delta\lambda$max $\approx$ 1,3 %).

Im Extremfall kann sich als Summe der in den Klammern angegebenen Abschätzungen für die maximalen Änderungen in eine Richtung eine Lambda-Verschiebung von 11,5 % ergeben, wodurch sich ohne Regelung anstelle eines voreingestellten Lambda-Wertes ein Lambda-Wert einstellen kann, bei dem der Motor aussetzt oder bei einem Abdriften des Lambda-Wertes in die andere Richtung die $NO_x$-Schadstoffemission

beispielsweise das Vierfache der erlaubten $NO_x$-Schadstoffemission ansteigt.

Es wurde bereits bei einem auch im Magerbetrieb betreibbaren Gasmotor eine Regelung über eine den $O_2$-Gehalt im Abgas messende Sauerstoff-Sonde vorgeschlagen. Diese Regelung über eine Sauerstoff-Sonde weist jedoch in der Praxis zahlreiche Nachteile auf: Die Kennlinie der Sauerstoff-Sonde ist im Magerbereich sehr flach, so daß größere Lambda-Änderungen nur geringe Änderungen des Sondenausgangssignals zur Folge haben und damit die Genauigkeit der Regelung gering ist. Neben den hohen Kosten für eine derartige Sauerstoff-Sonde und der zugehörigen Auswertschaltung besteht ein weiterer Nachteil darin, daß jede Sauerstoff-Sonde eigens justiert werden muß. Außerdem hat sich gezeigt, daß Sauerstoff-Sonden bei längerem Dauerbetrieb des Gasmotors störanfällig sind und eine Verschiebung der Sondenkennlinie auftreten kann.

Die Einrichtung zur Regelung des Verbrennungsgas-Luftverhältnisses eines Flüssiggasmotors gemäß der EP-A-121 028 scheint grundsätzlich auch für magere Betriebsweise geeignet und verwendet ebenfalls eine Sauerstoff-Sonde im Abgassystem. Das Signal dieser Sauerstoff-Sonde stellt die eigentliche über einen Lambda-Regler geregelte Regelgröße dar, während das von einer Leistungsmeßeinrichtung erfaßte Leistungssignal und der von einem Druckmesser erfaßte Gemischdruck lediglich als Parameterwerte für die Korrektur einer Gas(einspritz)menge benutzt werden. Damit weist die bekannte Einrichtung auch die oben angeführten Nachteile einer Sauerstoff-Sonde auf.

Die Aufgabe der Erfindung besteht nun darin, eine kostengünstige Einrichtung der eingangs genannten Art zur Regelung des Verbrennungsgas-Luftverhältnisses $\lambda$ bei einem Gasmotor mit magerer Betriebsweise zu schaffen, mit der ohne die Verwendung anfälliger und teurer Sauerstoff-Sonden in der Abgasleitung eine exakte Regelung des Verbrennungsgas-Luftverhältnisses auch bei variierender Motorleistung möglich ist. Weiters soll die Regelung bei einer Änderung des Heizwertes des Gases (allenfalls auch ohne Messung des Heizwertes) eine Regelung des Lambda-Wertes innerhalb des geforderten Lambda-Bereiches ermöglichen.

Dies wird erfindungsgemäß dadurch erreicht, daß der Ausgang des Druckmessers mit einem Istwert-Eingang des Lambda-Reglers verbunden ist, und daß im Lambda-Regler eine Einrichtung zur Ermittlung eines leistungsabhängigen Sollwertes für den Gemischdruck aus dem von der Leistungsmeßeinrichtung zugeführten Leistungsmeßsignal angeordnet ist, wobei der Lambda-Regler bei einer Abweichung des gemessenen Gemischdruckes vom leistungsabhängigen Gemischdruck-Sollwert das Verbrennungsgas-Luftverhältnis über die Stelleinrichtung verstellt bis der gemessene Gemischdruck und der leistungsabhängige Gemischdruck-Sollwert übereinstimmen.

Der Erfindung liegt die Idee zugrunde, den bei konstanter Motorleistung, bei konstanter Drehzahl, bei konstanter Temperatur des Gemisches vor den Einlaßventilen und bei konstantem Heizwert des Gases bestehenden funktionellen Zusammenhang zwischen Verbrennungsgas-Luftverhältnis und dem vor den Einlaßventilen des Motors herrschenden, relativ leicht meßbaren Gemischdruck auszunutzen, um eine Regelung des Verbrennungsgas-Luftverhältnisses durch Regelung des genannten Gemischdruckes durchzuführen. Dabei erfolgt die Regelung des Gemischdruckes indirekt über die Regelung des Verbrennungsgas-Luftverhältnisses $\lambda$ im Luft-Gas-Mischer, wobei beispielsweise ein Abmagern des Gemisches (Erhöhen von $\lambda$) eine Erhöhung des Gemischdruckes vor den Einlaßventilen bewirkt (bei der Forderung einer konstanten Motorleistung).

Jedem leistungsabhängigen Sollwert für das Verbrennungsgas-Luftverhältnis $\lambda$, der im mittleren Bereich des zwischen der leistungsabhängigen Aussetzergrenze und der ebenfalls leistungsabhängigen $NO_x$-Emissionsgrenze definierten Lambda-Bereich liegt, entspricht bei einer bestimmten Motorleistung ein damit ebenfalls leistungsabhängiger Sollwert des genannten Gemischdruckes, auf den der gemessene Gemischdruck (Istwert) durch die oben beschriebene indirekte Regelung über den Luft-Gas-Mischer geregelt wird. Als Funktion der Motorleistung existieren also eine beispielsweise für einen Motortyp einmalig experimentell ermittelte Lambda-Sollwertkurve (im Lambda-Bereich) und eine zugehörige Gemischdruck-Sollwertkurve, wobei die eindeutige Zuordnung der Lambda-Sollwertkurve über der Motorleistung auf eine Gemischdruck-Sollwertkurve über der Motorleistung und umgekehrt zunächst eine konstante Gemischtemperatur vor den Einlaßventilen und einen konstanten Heizwert des Gases voraussetzt. Der Einfluß einer variierenden Gemischtemperatur und eines nicht konstanten Heizwertes wird später noch erläutert werden. Zunächst seien diese Größen als konstant vorausgesetzt.

Die Funktionsweise der Regelung ist die folgende: Liegt beispielsweise bei einer bestimmten Motorleistung der zugehörige Lambda-Wert unter dem Sollwert (Erhöhung der $NO_x$-Schadstoffanteile im Abgas) und damit der Gemischdruck vor den Einlaßventilen bei der vorliegenden Motorleistung zu niedrig, so stellt der Lambda-Regler eine Differenz zwischen dem über einen Istwert-Eingang zugeführten Istwert (=Regelgröße) des Gemischdruckes und dem in einer Einrichtung des Lambda-Reglers aus dem zugeführten Leistungsmeßsignal und der beispielsweise einprogrammierten Sollwertkurve für den Gemischdruck ermittelten Sollwert des Gemischdruckes fest und bewirkt über die Stelleinrichtung des Luft-Gas-Mischers, beispielsweise durch erhöhte Luftzuführung in einem Luftbypass, eine Abmagerung des Gemisches, also zur gewünschten Erhöhung des Lambda-Wertes, der ja am Anfang des eben betrachteten Regelvorganges unter dem Sollwert lag.

Ohne Leistungsregelung des Gasmotors (Drosselklappe o.ä) sinkt mit der genannten Abmagerung des Gemisches (=Absenkung des Gemischheizwertes) allerdings auch die Motorleistung. Wichtig ist dabei jedoch, daß nach erfolgter Lambda-Regelung ohne Leistungsregelung des Gasmotors zwar u.U. die Motorleistung anders liegt, das zugehörige Verbrennungsgas-Luftverhältnis aber gleich dem zu dieser anderen Motorleistung gehörigen Lamdba-Sollwert ist bzw. der Gemischdruck-Istwert gleich dem zu dieser anderen Motorleistung gehörigen Sollwert ist, und damit die Einstellung des Motors paßt.

In der Praxis wird der Gasmotor so ausgebildet sein, daß in der Ansaugleitung nach dem Luft-Gas-Mischer eine leistungssteuernde Drosseleinrichtung, beispielsweise eine Drosselklappe, angeordnet ist. Durch diese Drosseleinrichtung könnte der Gasmotor z. B. von Hand aus wieder auf die ursprüngliche oder falls erwünscht auf eine andere Motorleistung geführt werden. Immer paßt der Wert des Gemischdruckes und damit der Lambda-Wert zur Motorleistung.

Abgesehen von händischer bzw. nicht vorhandener Leistungsregelung kann gemäß einer bevorzugten Ausführungsform der Erfindung vorgesehen sein, daß die Drosseleinrichtung über eine vorzugsweise einstellbare Regeleinrichtung in Abhängigkeit von der Motorleistung stellbar ist und die über diese Regeleinrichtung vorgenommene Leistungsregelung auf Motorleistungsänderungen schneller anspricht als die über den Lambda-Regler vorgenommene Verbrennungsgas-Luftverhältnis-Regelung. Bei einer derartigen Gasmotorregelung erfolgt die Lambda-Regelung prinzipiell gleich wie bei ungeregelten Gasmotoren, jedoch wird beispielsweise bei einer Abmagerung des Gemisches durch den Lambda-Regler sofort noch während der Abmagerung die Drosselklappe geöffnet und damit die Leistung konstant gehalten. Nach erfolgter relativ langsamer (was bei Stationärgasmotoren keinen Nachteil darstellt) Lambda-Regelung und damit Gemischdruckregelung paßt jedenfalls der Lambda-Wert und der gemessene Gemischdruck-Istwert zur konstant gehaltenen Leistung. Welche Leistung konstant gehalten werden soll, läßt sich günstigerweise einstellen.

Zur Entkoppelung der Leistungsregelung von der Lambda-Regelung über Gemischdruck, die ebenfalls ein Leistungsmeßsignal verarbeitet, und zur Verhinderung von unerwünschten, unkontrollierbaren Schwingungsvorgängen spricht der Leistungsregler (Drosselklappe) viel schneller an als die Lambda-Regelung.

Der bereits erläuterte Zusammenhang zwischen der Lambda-Sollwertkurve über der Motorleistung und der Gemischdruck-Sollwertkurve über der Motorleistung hängt u.a. auch von der bisher als konstant betrachteten Gemischtemperatur vor den Einlaßventilen ab, sodaß eigentlich jeder Gemischtemperatur bei gegebener Lamdba-Sollwertkurve eine andere Gemischdruck-Sollwertkurve entspräche. Der Einfluß einer Gemischtemperaturänderung auf den Gemischdrucksollwert bei einer Motorleistung ist formelmäßig bekannt und läßt sich daher, falls eine von der Gemischtemperatur abhängige Korrektur nötig erscheint, rechnerisch kompensieren. Ein bevorzugtes Merkmal der Erfindung besteht dazu darin, daß der Lambda-Regler eine Einrichtung zur Temperaturkompensation aufweist, deren Eingang mit einem Temperaturmeßfühler zur Erfassung der vor den Einlaßventilen des Motors herrschenden Gemischtemperatur verbunden ist und die eine in Abhängigkeit der vom Temperaturmeßfühler festgestellten Korrektur des ermittelten leistungsabhängigen Sollwertes für den Gemischdruck festlegt.

Der genannte Zusammenhang zwischen der Lambda-Sollwertkurve über der Motorleistung und der Gemischdruck-Sollwertkurve über der Motorleistung ist nicht nur temperaturabhängig, sondern grundsätzlich auch vom Heizwert des Gases abhängig, sodaß bei Heizwertänderungen des Gases entweder eine Korrektur der Gemischdruck-Sollwertkurve durchgeführt werden muß (was in der Praxis aber eine aufwendige Messung des Heizwertes erfordert), oder in Kauf genommen werden muß, daß die Lambda-Sollwertkurven und die Gemischdruck-Sollwertkurven für den Vergleich mit dem gemessenen Gemischdruck bei Heizwertänderungen nicht mehr ganz korrespondieren, d.h. einem gemäß der Gemischdruck-Sollwertkurve bei einer bestimmten Motorleistung exakt geregelten Gemischdruck entspricht bei einer Heizwertänderung ein nicht mehr auf der Lambda-Sollwertkurve liegender Lambda-Wert. Dies ist eine Folge des im Gas mit geringem Heizwert enthaltenen Inertgasanteiles. Glücklicherweise zeigte sich sowohl experimentell als auch theoretisch, daß bei exakter Korrespondenz der Lambda-Sollwertkurve mit der Gemischdruck-Sollwertkurve bei einem Gas mit dem höchsten auftretenden Heizwert, der sich tatsächlich einstellende Lambda-Wert nur leicht unterhalb der Lambda-Sollwertkurve liegt, wenn der Heizwert des Gases gesunken ist und der Gemischdruck exakt auf der Gemischdruck-Sollwertkurve liegt. Aussetzer sind damit auf Grund von Heizwertreduzierungen (auch ohne Korrektur) nicht möglich. Eher geht der sich einstellende Lambda-Wert bei Heizwertreduzierungen des Gases gegen die untere Lambda-Bereichsgrenze der $NO_x$-Schadstoffanteilgrenze. Bei den üblicherweise auftretenden Heizwertschwankungen liegt der Lambda-Wert ohne Korrektur der Heizwertschwankung zwar unterhalb der ursprünglichen Lambda-Sollwertkurve (entsprechend dem Gas mit dem höchsten Heizwert), jedoch noch im zulässigen Lambda-Bereich zumal bei einem Heizwertabsinken des Gases auch die Aussetzergrenze und die $NO_x$-Schadstoffemissionsgrenze und damit das ganze relevante Lambda- Bereich sinkt. Eine spezielle Berücksichtigung (Messung) der Heizwertschwankungen des Gases kann daher bei der erfindungsgemäßen Einrichtung ganz im Gegensatz zur Messung mit Sauerstoff-Sonden im Abgas, wo eine derartige Messung absolut nötig ist, entfallen, was einen weiteren entscheidenden Vorteil der erfindungsgemäßen Regeleinrichtung darstellt.

Beim Magerbetrieb werden vor allem die $NO_x$-Schadstoffanteile gering gehalten. Obwohl auch die CO- und $C_nH_m$-Schadstoffanteile nicht hoch sind, kann gegebenenfalls zur Erfüllung strengster Normen zusätzlich ein unkomplizierter und robuster Oxidationskatalysator in der Abgasleitung vorgesehen sein.

Die Erfindung wird anschließend anhand eines Ausführungsbeispieles durch die Figuren der Zeichnung näher erläutert.

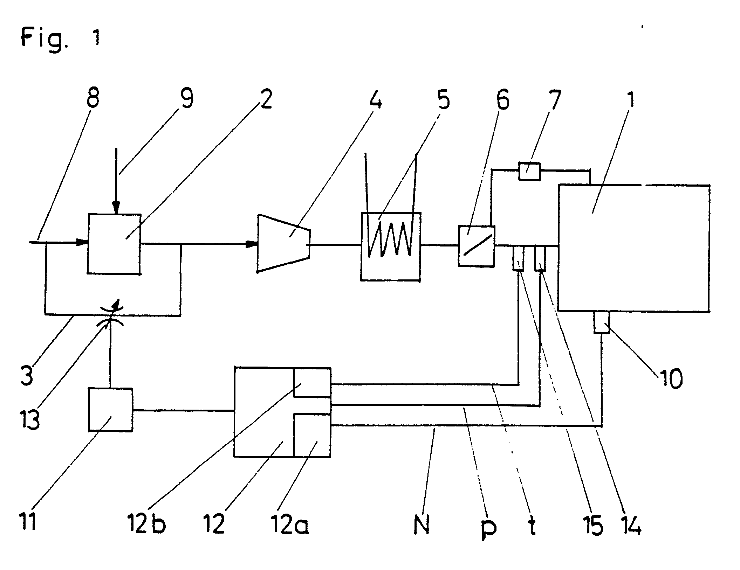

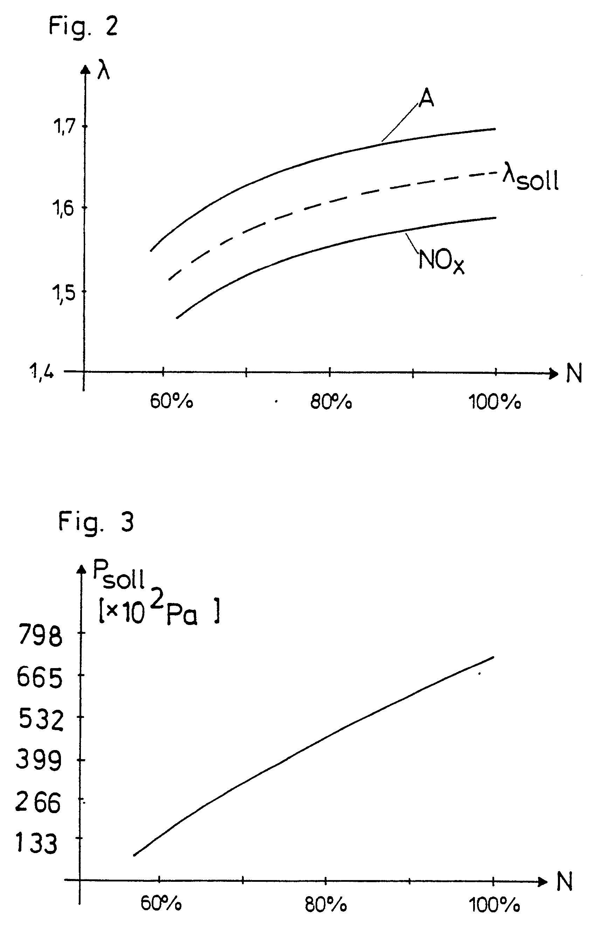

Es zeigen die Fig. 1 ein schematisches Blockdiagramm eines Ausführungsbeispieles der erfindungsgemäßen Einrichtung, Fig. 2 einen typischen Verlauf der Aussetzergrenze der $NO_x$-Schadstoff-Emissionsgrenze und strichliert die Lambda-Sollwertkurve über der Leistung und Fig. 3 die zur in Fig. 1 gezeigten Lambda-Sollwertkurve bei einer festen Gemischtemperatur und dem höchsten auftretenden Heizwert gehörige Gemischdruck-Sollwertkurve über der Leistung.

Die in Fig. 1 gezeigte Einrichtung dient zur Verbrennungsgas-Luftverhältnis-Regelung (Lambda-Regelung) und zur an sich bekannten Leistungsregelung des mit 1 bezeichneten Gasmotors, der im wesentlichen mit konstanter Drehzahl läuft. Dem Gasmotor 1 wird ein durch den im wesentlichen fest eingestellten Luft-Gas-Mischer 2 (Luftzufuhr 8, Gaszufuhr 9) und die als Stellglied dienende Luft-Bypass-Leitung 3 bereitetes Luft-Gas-Gemisch mit einem vorbestimmten Verbrennungsgas-Luftverhältnis über einen Verdichter 4, einen Gemischkühler 5 und letztlich über eine Drosselklappe 6 zugeführt. Der Gasmotor 1 ist über die schnell ansprechende, einstellbare Regeleinrichtung 7 und über die Drosselklappe 6 leistungsgeregelt, wobei die Drosselklappe 6 bei einer gewünschten, angesetzten Maximalleistung des Gasmotors bei höchster Gasqualität günstigerweise nicht ganz geöffnet ist, damit auch bei einem Heizwertabfall des Gases diese angestrebte Maximalleistung durch Öffnen der Drosselklappe 6 erreicht werden kann.

Die Lambda-Regelung erfolgt gemäß der Erfindung über die leistungsabhängige Regelung des vor den Einlaßventilen des Motors herrschenden Gemischdruckes, bei jeder Motorleistung (bei konstantem Gasheizwert und bei konstanter Gemischtemperatur) genau ein bestimmter Lambda-Wert entspricht. Die Druckregelung zu einer bestimmten von der Leistungsmeßeinrichtung 10 ermittelten Motorleistung N erfolgt indirekt über die Regelung des Verbrennungsgas-Luftverhältnisses durch das von der Stelleinrichtung 11 des Lambda-Reglers 12 angesteuerte Stellventil 13 in der zum Luft-Gas-Mischer 2 parallel angeordneten Luft-Bypass-Leitung 3. Der zur Druckregelung auf einen leistungsabhängigen Sollwert benötigte Gemischdruck-Istwert wird vom Druckmesser 14 erfaßt, dessen Ausgang mit einem Istwert-Eingang des Lambda-Reglers 12 verbunden ist. Die leistungsabhängige Gemischdruck-Sollwertkurve (für eine feste Gemischtemperatur und beispielsweise dem höchsten Gasheizwert entsprechend) ist in die programmierbare Einrichtung 12a einprogrammiert, welche zu jeder Motorleistung N einen Gemischdruck-Sollwert ermittelt. Wie aus Fig. 3 ersichtlich ist, besteht ein nahezu linearer Zusammenhang zwischen dem Gemischdruck-Sollwert $p_{soll}$ und Motorleistung N.

Diese Gemischdruck-Sollwertkurve über der Leistung N entspricht bei einer konstanten Gemischtemperatur t und einem konstanten Heizwert des Gases genau einer Lambda-Sollwertkurve über der Leistung, wie sie in Fig. 2 strichliert dargestellt ist. Auf diesem Zusammenhang der beiden Sollwertkurven baut die Erfindung im wesentlichen auf.

Die %-Angaben der Leistung in den Fig. 2 und 3 beziehen sich auf eine gewünschte Normleistung des Gasmotors (die beim Betrieb eines Generators bei Vollast erreicht wird). In Fig. 2 ist mit A die leistungsabhängige Aussetzergrenze bezeichnet, oberhalb derer das Gemisch zu mager ist. Die untere Grenze bildet die geforderte $NO_x$-Schadstoffemissionsgrenze, unterhalb derer die $NO_x$-Schadstoffemission zu hoch ist. Zwischen den Kurven A und $NO_x$ der Fig. 2 liegt der Lambda-Bereich, in dessen Mitte die strichlierte Lambda-Sollwertkurve verläuft.

Durch Regelung des Gemischdruck-Istwertes p auf den leistungsabhängigen Sollwert $p_{soll}$ gemäß Fig. 3 wird (bei fester Temperatur des Gemisches und bei festem Heizwert des Gases) auch das Verbrennungsgas-Luftverhältnis (Istwert) auf der in Fig. 2 gezeigten Lambda-Sollwertkurve liegen.

Die Funktionsweise der Einrichtung wird anhand eines Beispieles erläutert:

Angenommen die vom Temperaturmeßfühler erfaßte Temperatur t des Gemisches und der Heizwert des Gases seien konstant. Sinkt nun der Lambda-Wert bei einer vorbestimmten, an der Regeleinrichtung 7 eingestellten Motorleistung ab (Überfettung des Gemisches), so würde dies ohne Leistungsregelung an der Drosselklappe zu einer Leistungssteigerung führen. Die schnelle Regeleinrichtung 7 hält beim vorliegenden Ausführungsbeispiel allerdings die Leistung konstant. Bei einem niedrigen Lambda-Wert liegt damit bei dieser Leistung auch ein zu niedriger Gemischdruckwert p am Druckmesser 14 an. Der Lambda-Regler 12 entdeckt, daß der Gemischdruck-Istwert p bei dieser Motorleistung unterhalb des Sollwertes $p_{soll}$ (Fig. 3) liegt und veranlaßt über eine Öffnung des Steilventiles 13 eine Abmagerung des Gemisches (steigt). Damit steigt auch der Gemischdruck-Istwert p bis $p_{soll}$ erreicht ist. Der zu niedrige Lambda-Wert ist korrigiert und der Gasmotor läuft optimal.

Es wird darauf hingewiesen, daß die Leistungsregelung über die Drosselklappe o.ä. keinen wesentlichen Einfluß auf das Funktionieren der erfindungsgemäßen Lambda-Regelung hat. Ohne Leistungsregelung wird zwar die Motorleistung leicht variieren, was z. B. bei Pumpenmotoren von geringer Bedeutung ist, jedenfalls wird aber zu jeder Motorleistung ein passender Gemischdruck und damit ein Lambda-Wert auf der Lambda-Sollwertkurve eingestellt.

Der Einfluß der sich ändernden Gemischtemperatur wird über die Einrichtung 12b des Lambda-Reglers 12 ausgeglichen, indem in Abhängigkeit der vom Temperaturfühler 15 festgestellten Gemischtemperatur t ein korrigierter Gemischdruck-Sollwert zur vorliegenden Leistung ermittelt wird, mit dem dann der Gemischdruck-Istwert verglichen wird. Die in Fig. 3 gezeigte Kurve entspricht also nur für eine Gemischtemperatur der Lambda-Sollwertkurve der Fig. 2.

Prinzipiell kann die erfindungsgemäße Regelung auch für Saugmotoren verwendet werden, bei denen dann der in Fig. 1 gezeigte Verdichter 4 und der Gemischkühler 5 entfällt.

## Patentansprüche

1. Einrichtung zur Regelung des Verbrennungsgas-Luftverhältnisses bei einem Gasmotor (1) mit magerer Betriebsweise, in dessen Ansaugleitung ein Luft-Gas-Mischer (2) angeordnet ist, wobei ein Lambda-Regler (12), dem zur Änderung des Verbrennungsgas-Luftverhältnisses eine den Luft-Gas-Mischer einstellende Stelleinrichtung (11, 13) nachgeschaltet ist, und eine Leistungsmeßeinrichtung (10) zur Erfassung der Motorleistung vorgesehen sind, und wobei ein Druckmesser (14) zur Erfassung des vor den Einlaßventilen des Motors (1) herrschenden Gemischdruckes (p) vorgesehen ist, dadurch gekennzeichnet, daß der Ausgang des Druckmessers (14) mit einem Istwert-Eingang des Lambda-Reglers (12) verbunden ist, und daß im Lambda-Regler (12) eine Einrichtung (12a) zur Ermittlung eines leistungsabhängigen Sollwertes für den Gemischdruck (p) aus dem von der Leistungsmeßeinrichtung (10) zugeführten Leistungsmeßsignal angeordnet ist, wobei der Lambda-Regler (12) bei einer Abweichung des gemessenen Gemischdruckes (p) vom leistungsabhängigen Gemischdruck-Sollwert das Verbrennungsgas-Luftverhältnis über die Stelleinrichtung (11, 13) verstellt bis der gemessene Gemischdruck (p) und der leistungsabhängige Gemischdruck-Sollwert übereinstimmen.

2. Einrichtung nach Anspruch 1 dadurch gekennzeichnet, daß der Lambda-Regler (12) eine Einrichtung (12b) zur Temperaturkompensation aufweist, deren Eingang mit einem Temperaturmeßfühler (15) zur Erfassung der vor den Einlaßventilen des Motors (1) herrschenden Gemischtemperatur (t) verbunden ist und die in Abhängigkeit der vom Temperaturmeßfühler (15) festgestellten Temperatur den leistungsabhängigen Sollwert für den Gemischdruck (p) festlegt.

3. Einrichtung nach Anspruch 1 oder 2, dadurch gekennzeichnet, daß in der Ansaugleitung nach dem Luft-Gas-Mischer (2) eine leistungssteuernde Drosseleinrichtung, beispielsweise eine Drosselklappe (6), angeordnet ist.

4. Einrichtung nach Anspruch 3, dadurch gekennzeichnet, daß die Drosseleinrichtung (6) über eine vorzugsweise einstellbare Regeleinrichtung (7) in Abhängigkeit von der Motorleistung (N) stellbar ist und die über diese Regeleinrichtung (7) vorgenommene Leistungsregelung auf Motorleistungsänderungen schneller anspricht, als die über den Lambda-Regler (12) vorgenommene Verbrennungsgas-Luftverhältnisregelung.

5. Einrichtung nach einem der Ansprüche 1 bis 4, dadurch gekennzeichnet, daß zum Luft-Gas-Mischer (2) eine Luft-Bypass-Leitung (3) angeordnet ist, in der ein die Luftmenge steuerndes Stellventil (13) angeordnet ist, das von der Stelleinrichtung (11) des Lambda-Reglers (12) betätigbar ist.

6. Einrichtung nach einem der Ansprüche 1 bis 5, dadurch gekennzeichnet, daß in der Abgasleitung ein Oxidationskatalysator angeordnet ist.

7. Einrichtung nach einem der Ansprüche 1 bis 6, dadurch gekennzeichnet, daß in der Ansaugleitung zwischen dem Luft-Gas-Mischer (2) und dem Gasmotor (1) ein Gemischverdichter (4) angeordnet ist.

8. Einrichtung nach einem der Ansprüche 1 bis 7, dadurch gekennzeichnet, daß die Einrichtung (12a) zur Ermittlung eines leistungsabhängigen Sollwertes für den Gemischdruck (p) aus dem von der Leistungsmeßeinrichtur (10) zugeführten Leistungsmeßsignal programmierbar ist.

## Claims

1. Apparatus for regulating the combustion gas-air ratio in a gas engine (1) with a lean operating mode, in the intake duct of which is arranged an air-gas mixer (2), wherein there are provided a lambda regulator (12), downstream of which is disposed an adjusting means (11, 13) for adjusting the air-gas mixer, for varying the combustion gas-air ratio, and an output measuring means (10) for detecting the engine output, and wherein there is provided a pressure measuring means (14) for detecting the pressure (p) of the mixture, which obtains upstream of the inlet valves of the engine (1), characterised in that the output of the pressure measuring means (14) is connected to an actual value input of the lambda regulator (12) and that disposed in the lambda regulator (12) is a means (12a) for determining an output-dependent reference value in respect of the pressure (p) of the mixture, from the output measurement signal supplied by the output measuring means (10), wherein in the event of a deviation of the measured pressure (p) of the mixture from the output-dependent reference value in respect of the pressure of the mixture, the lambda regulator (12) adjusts the combustion gas-air ratio by way of the adjusting means (11, 13) until the measured pressure (p) of the mixture and the output-dependent reference value in respect of the pressure of the mixture coincide.

2. Apparatus according to claim 1 characterised in that the lambda regulator (12) has a temperature compensation means (12b), the input of which is connected to a temperature measuring sensor (15) for detecting the temperature (t) of the mixture, which obtains upstream of the inlet valves of the engine (1), the temperature compensation means establishing the output-dependent reference value in respect of the pressure (p) of the mixture, in dependence on the temperature detected by the temperature measuring sensor (15).

3. Apparatus according to claim 1 or claim 2 characterised in that an output-controlling throttle means, for example a throttle flap (6), is arranged in the intake duct downstream of the air gas mixer (2).

4. Apparatus according to claim 3 characterised in that the throttle means (6) is adjustable by way of a preferably adjustable regulating means (7) in dependence on the engine output (N) and the output regulation provided by way of said regulating means (7) responds to variations in engine output more rapidly than the combustion gas-air ratio regulation provided by way of the lambda regulator (12).

5. Apparatus according to one of claims 1 to 4 characterised in that arranged in relation to the air-gas mixer (2) is an air bypass duct (3) in which is arranged a control valve (13) which controls the amount of air and which can be actuated by the adjusting means (11) of the lambda regulator (12).

6. Apparatus according to one of claims 1 to 5 characterised in that an oxidation catalyst is disposed in the exhaust gas pipe.

7. Apparatus according to one of claims 1 to 6 characterised in that a mixture compressor (4) is disposed in the intake duct between the air-gas mixer (2) and the gas engine (1).

8. Apparatus according to one of claims 1 to 7 characterised in that the means (12a) for determining an output-dependent reference value in respect of the pressure (p) of the mixture is programmable from the output measurement signal supplied by the output measuring means (10).

## Revendications

1. Dispositif de régulation de la proportion d'air de combustion au gaz dans un moteur à gaz (1) à fonctionnement pauvre dans la conduite d'aspiration duquel est disposé un mélangeur air-gaz (2), un régulateur lambda (12) en aval duquel est monté un dispositif de réglage (11, 13) réglant le mélangeur air-gaz pour modifier la proportion d'air de combustion au gaz et un dispositif de mesure de puissance (10) destiné à détecter la puissance du moteur étant prévus, et un manomètre (14) destiné à détecter la pression du mélange (p) régnant avant les soupapes d'admission du moteur (1) étant prévu, caractérisé en ce que la sortie du manomètre (14) est reliée à une entrée de valeur instantanée du régulateur lambda (12) et en ce qu'il est prévu dans le régulateur lambda (12) un dispositif (12a) destiné à déterminer pour la pression du mélange (p) une valeur de consigne dépendant de la puissance, à partir du signal de mesure de puissance fourni par le dispositif de mesure de puissance (10), le régulateur lambda (12) ajustant, en cas d'écart de la pression du mélange (p) mesurée par rapport à la valeur de consigne de la pression du mélange dépendant de la puissance, la proportion d'air de combustion au gaz par l'intermédiaire du dispositif de réglage (11, 13) jusqu'à ce que la pression du mélange (p) mesurée et la valeur de consigne de la pression du mélange dépendant de la puissance coïncident.

2. Dispositif selon la revendication 1, caractérisé en ce que le régulateur lambda (12) présente un dispositif (12b) de compensation de température dont l'entrée est reliée à un capteur de température (15) destiné à détecter la température du mélange (t) avant les soupapes d'admission du moteur (1) et qui, en fonction de la température détectée par le capteur de température (15), détermine la valeur de consigne de la pression du mélange (p) dépendant de la puissance.

3. Dispositif selon la revendication 1 ou 2, caractérisé en ce qu'un dispositif d'étranglement réglant la puissance, tel qu'une soupape d'étranglement (6), par exemple, est disposé dans la conduite d'aspiration, après le mélangeur air-gaz (2).

4. Dispositif selon la revendication 3, caractérisé en ce que le dispositif d'étranglement (6) peut être réglé en fonction de la puissance du moteur (N) par l'intermédiaire d'un dispositif de réglage (7) de préférence réglable et en ce que la régulation de puissance effectuée par l'intermédiaire de ce dispositif de réglage (7) réagit plus vite à des variations de la puissance du moteur que la régulation de la proportion d'air de combustion au gaz effectuée par l'intermédiaire du régulateur lambda (12).

5. Dispositif selon l'une des revendications 1 à 4, caractérisé en ce qu'il est associé au mélangeur air-gaz (2) une conduite d'air à bypass (3) dans laquelle est disposée une soupape de réglage (13) qui règle la quantité d'air et peut être actionnée par le dispositif de réglage (11) du régulateur lambda (12).

6. Dispositif selon l'une des revendications 1 à 5, caractérisé en ce qu'un convertisseur catalytique à oxydation est disposé dans la conduite d'aspiration.

7. Dispositif selon l'une des revendications 1 à 6, caractérisé en ce qu'un compresseur de mélange (4) est disposé dans la conduite d'aspiration entre le mélangeur air-gaz (2) et le moteur à gaz (1).

8. Dispositif selon l'une des revendications 1 à 7, caractérisé en ce que le dispositif (12a) destiné à déterminer pour la pression du mélange (p) une valeur de consigne dépendant de la puissance peut être programmé à partir du signal de mesure de puissance fourni par le dispositif de mesure de puissance (10).

Fig. 1

Fig. 2

Fig. 3